# EUROPÄISCHE PATENTANMELDUNG

(11) **EP 4 497 663 A1**
(43) Veröffentlichungstag der Anmeldung: **29.01.2025**
(21) Anmeldenummer: 24177010.6
(22) Anmeldetag: 21.05.2024
(51) Int. Cl.: B62D 55/10, B62D 55/112

(54) **RAUPENLAUFWERK FÜR EINE LANDWIRTSCHAFTLICHE ARBEITSMASCHINE SOWIE LANDWIRTSCHAFTLICHE ARBEITSMASCHINE**

(30) Priorität: 24.07.2023 DE 102023119486
(71) Anmelder: CLAAS Industrietechnik GmbH, 33106 Paderborn (DE)
(72) Erfinder: Wagemann, Sebastian, 59302 Oelde-Sünninghausen (DE)
(74) Vertreter: CLAAS 365FarmNet GmbH

(57) **Zusammenfassung**

Die vorliegende Anmeldung betrifft ein Raupenlaufwerk (1) für eine landwirtschaftliche Arbeitsmaschine (2), umfassend ein vorderes Hauptrad (3), ein hinteres Hauptrad (4), einen dem vorderen Hauptrad (3) zugeordneten vorderen Hauptrahmen (5), einen dem hinteren Hauptrad (4) zugeordneten hinteren Hauptrahmen (6), mindestens zwei Stützräder (9, 10), einen die Haupträder (3, 4) umspannenden Laufgurt (11) sowie eine Anlenkstelle (12), mittels der das Raupenlaufwerk (1) unter Ausbildung einer Maschinenachse (13) schwenkbeweglich mit einer Karosserie (42) der Arbeitsmaschine (2) verbindbar ist, wobei die beiden Hauptrahmen (5, 6) um eine gemeinsame Schwenkachse (14) schwenkbeweglich miteinander gekoppelt sind, wobei die Stützräder (9, 10) an einem gemeinsamen Stützrahmen (15) angeordnet sind, wobei der Stützrahmen (15) mittels einer Stützradschwinge (17) schwenkbeweglich mit dem vorderen Hauptrahmen (5) verbunden ist.

Um ein Raupenlaufwerk für eine landwirtschaftliche Arbeitsmaschine bereitzustellen, das gegenüber dem Stand der Technik mit Blick auf verschiedene Betriebszustände der Arbeitsmaschine flexibler einsetzbar ist, werden erfindungsgemäß eine erste Kolben-Zylinder-Einheit (18), die an ihrem ersten Ende (19) mit der Stützradschwinge (17) und an ihrem zweiten Ende (20) mit dem hinteren Hauptrahmen (6) gekoppelt ist, sowie eine zweite Kolben-Zylinder-Einheit (28), die an ihrem ersten Ende (40) mit dem vorderen Hauptrahmen (5) und an ihrem zweiten Ende (41) mit dem hinteren Hauptrahmen (6) gekoppelt ist, vorgeschlagen.

## Beschreibung

Die vorliegende Anmeldung betrifft ein Raupenlaufwerk für eine landwirtschaftliche Arbeitsmaschine gemäß dem Oberbegriff von Anspruch 1. Ferner betrifft die vorliegende Anmeldung eine landwirtschaftliche Arbeitsmaschine gemäß dem Oberbegriff von Anspruch 15.

Das Raupenlaufwerk umfasst ein vorderes Hauptrad sowie ein hinteres Hauptrad. Diese Haupträder werden in der Technik auch als sogenannte "Idler Wheels" bezeichnet. Typischerweise ist eines der Haupträder, in aller Regel das hintere, drehantreibbar, während das andere Hauptrad passiv zur Führung eines die Haupträder umspannenden Laufgurts dient. Letzterer ist ebenfalls Teil des Raupenlaufwerks. Die Haupträder sind in Längsrichtung des Raupenlaufwerks betrachtet einander gegenüberliegend bzw. hintereinander angeordnet. Hierbei sind das vordere Hauptrad einem vorderen Hauptrahmen und das hintere Hauptrad einem hinteren Hauptrahmen zugeordnet. Diese Zuordnung kann insbesondere darin bestehen, dass die Haupträder mittelbar oder unmittelbar an ihrem jeweiligen Hauptrahmen angeordnet sind und jeweils um eine Drehachse drehbeweglich gelagert sind.

Insbesondere kann das vordere Hauptrad unter Ausbildung seiner Drehachse an einem Schwenkarm gelagert sein, der an dem vorderen Hauptrahmen angeordnet ist. Der Schwenkarm ist hierbei und Ausbildung eines Drehgelenks an den Hauptrahmen angeschlossen, sodass der Schwenkarm relativ zu dem Hauptrahmen verschwenkbar ist. Da die Drehachse des Hauptrads in einem Abstand von dem Drehgelenk des Schwenkarms an letzterem angeordnet ist, geht eine Verschwenkung des Schwenkarms relativ zu dem vorderen Hauptrahmen mit einer Bewegung der Drehachse des vorderen Hauptrads auf einer Kreisbahn um das Drehgelenk einher. Diese Bewegung führt zu einer Veränderung eines Abstands zwischen der Drehachse des vorderen Hauptrades und der Drehachse des hinteren Hauptrads, wodurch eine Gurtspannung des Laufgurts verändert wird. In einer solchen Konstellation kann der Schwenkarm bevorzugt ferner mit einer Kolben-Zylinder-Einheit zusammenwirken, mittels der eine Schwenkbewegung des Schwenkarms erzeugt werden kann und somit die Gurtspannung des Laufgurts einstellbar ist. Eine solche Kolben-Zylinder-Einheit wird in der Technik als "Bandspannzylinder" bezeichnet. Eine solche mittelbare Anordnung der Drehachse des vorderen Hauptrades an dem vorderen Hauptrahmen wird im Sinne der vorliegenden Anmeldung als eine Anordnung des vorderen Hauptrads an dem vorderen Hauptrahmen verstanden.

In einem zwischen den beiden Haupträdern befindlichen Zwischenbereich sind mindestens zwei Stützräder angeordnet. Diese werden in der Technik auch als sogenannte "Midroller" bezeichnet. Die Stützräder weisen typischerweise gegenüber den Haupträdern einen kleineren Durchmesser auf. Sie stehen ebenso wie die Haupträder unmittelbar mit dem Laufgurt im Kontakt, wobei die Stützräder mit einem unteren Abschnitt ("Untertrum") des Laufgurts in Kontakt stehen, der im Betrieb des Raupenlaufwerks typischerweise unmittelbar mit einem Untergrund in Kontakt tritt. Auf diese Weise können auf das Raupenlaufwerk einwirkende Kräfte sowohl über die beiden Haupträder als auch über die beiden Stützräder über den Laufgurt in den Untergrund abgeleitet werden.

Das Raupenlaufwerk umfasst ferner eine Anlenkstelle, mittels der es unter Ausbildung einer Maschinenachse schwenkbeweglich mit einer Karosserie einer jeweiligen Arbeitsmaschine verbindbar ist. Bei einer typischen landwirtschaftlichen Arbeitsmaschine wie beispielsweise einem Mähdrescher oder einem Feldhäcksler ist an einander gegenüberliegenden Enden einer Vorderachse der jeweiligen Arbeitsmaschine jeweils ein Raupenlaufwerk angeordnet. Das jeweilige Raupenlaufwerk ist dabei an der genannten Anlenkstelle an die Vorderachse der Arbeitsmaschine angelenkt, sodass die Arbeitsmaschine mittels der Raupenlaufwerke auf einem jeweiligen Untergrund aufsteht und über die Raupenlaufwerke ein Vortrieb der Arbeitsmaschine bewirkt werden kann.

Die beiden Hauptrahmen, denen die Haupträder zugeordnet sind, sind schwenkbeweglich miteinander gekoppelt. Hierdurch wird bewirkt, dass die Hauptrahmen gegeneinander um eine gemeinsame Schwenkachse relativ zueinander verschwenkbar sind. Bevorzugt ist diese Schwenkachse identisch zu der Maschinenachse an der Anlenkstelle des Raupenlaufwerks. Die Schwenkachse und die Maschinenachse sind jeweils horizontal sowie senkrecht zu einer von dem Laufgurt aufgespannten Laufgurtebene orientiert. Sie sind mithin parallel zueinander orientiert.

Die Stützräder sind an einem gemeinsamen Stützrahmen angeordnet, wobei sie bezogen auf eine Längsachse des Raupenlaufwerks hintereinander angeordnet sind. Mithin sind die Haupträder und die Stützräder in Längsrichtung des Raupenlaufwerks betrachtet "in Reihe" angeordnet, wobei das vordere Hauptrad ein vorderes Ende des Raupenlaufwerks bildet, sodann die beiden Stützräder folgen und schließlich das hintere Hauptrad das hintere Ende des Raupenlaufwerks bildet.

Zur Verbindung des Stützrahmens mit den Hauptrahmen ist eine Stützradschwinge vorgesehen, mittels der der Stützrahmen schwenkbeweglich mit dem vorderen Hauptrahmen verbunden ist. Die Stützradschwinge ist hierbei gelenkig sowohl mit dem vorderen Hauptrahmen als auch mit dem Stützrahmen verbunden. Die Stützradschwinge ist demzufolge in mechanischer Hinsicht als Pendelstab ausgebildet. Die gelenkige Verbindung der beiden Hauptrahmen sowie die gelenkige Verbindung der Stützradschwinge mit dem vorderen Hauptrahmen trägt dazu bei, dass jeweils die Haupträder und die Stützräder bei Überfahren eines Hindernisses getrennt voneinander angehoben werden können, ohne dass der Rest des Raupenlaufwerks vom Untergrund abhebt.

Raupenlaufwerke der vorstehend beschriebenen Art sind im Stand der Technik bereits bekannt. Hierzu wird beispielhaft auf die deutsche Offenlegungsschrift DE 10 2014 003 964 A1 hingewiesen. Die dort beschriebene Erfindung hat zum Gegenstand, dass die vorstehend als Schwenkachse bezeichnete Achse, um die der vordere Hauptrahmen und der hintere Hauptrahmen schwenkbeweglich relativ zueinander gelagert sind, und die Maschinenachse zusammenfallen, die sich an der Anlenkstelle des Raupenlaufwerks einer jeweiligen Arbeitsmaschine befindet.

Um eine Kraftabtragung, die über ein Raupenlaufwerk in einen jeweiligen Untergrund stattfindet, möglichst gleichmäßig über die einzelnen Räder des Raupenlaufwerks (sowohl Haupträder als auch Stützräder) zu bewirken, umfasst ein Raupenlaufwerk typischerweise mindestens eine Kolben-Zylinder-Einheit, die an einem ersten Ende mit der Stützradschwinge und mit einem zweiten Ende mit dem vorderen Hauptrahmen verbunden ist.

Ferner ist es bekannt, dass ein Raupenlaufwerk mindestens eine weitere Kolben-Zylinder-Einheit umfassen kann, die den vorderen Hauptrahmen und den hinteren Hauptrahmen miteinander verbindet. Die Aufgabenstellung für derartige Kolben-Zylinder-Einheiten besteht im Grunde darin, die Kraftverteilung über die einzelnen Räder zu vergleichmäßigen, und zwar auch dann, wenn Hindernisse überfahren werden, das heißt das Raupenlaufwerk nicht vollständig auf einem zumindest im Wesentlichen ebenen Untergrund aufsteht. Mit anderen Worten sollen über das Raupenlaufwerk abgeleitete Kräfte möglichst gleichmäßig über die Räder in den Untergrund geleitet werden.

Die bekannten Raupenlaufwerke haben den Nachteil, dass eine dynamische Konfiguration für verschiedene Betriebszustände nicht möglich ist. Die Bandbreite von Betriebszuständen kann jedoch beträchtlich sein. Beispielsweise muss ein Mähdrescher sowohl eine Leerfahrt über eine öffentliche Straße als auch im Rahmen der Ernte eine Fahrt mit voll beladenem Korntank über ein Feld als auch ein Wendemanöver in einem Vorgewende bewältigen. Die Anforderungen an die Kraftableitung in den Untergrund sind jeweils sehr unterschiedlich.

Der vorliegenden Anmeldung liegt mithin die Aufgabe zugrunde, ein Raupenlaufwerk für eine landwirtschaftliche Arbeitsmaschine bereitzustellen, das gegenüber dem Stand der Technik mit Blick auf verschiedene Betriebszustände der Arbeitsmaschine flexibler einsetzbar ist.

Die zugrunde liegende Aufgabe wird erfindungsgemäß mittels eines Raupenlaufwerks mit den Merkmalen des Anspruchs 1 gelöst. Vorteilhafte Ausgestaltungen ergeben sich aus den zugehörigen Unteransprüchen.

Das erfindungsgemäße Raupenlaufwerk ist durch eine erste Kolben-Zylinder-Einheit gekennzeichnet, die an ihrem ersten Ende ("Schwingenende") mit der Stützradschwinge und an ihrem zweiten Ende ("Rahmenende") mit dem hinteren Hauptrahmen gekoppelt ist. Hierdurch sind der hintere Hauptrahmen und die Stützradschwinge mittels der Kolben-Zylinder-Einheit in kraftübertragender Weise miteinander gekoppelt. In besonders bevorzugter Weise ist das Raupenlaufwerk abgesehen von der ersten Kolben-Zylinder-Einheit sowie der gelenkigen Anlenkung der Stützradschwinge an den vorderen Hauptrahmen frei von weiteren Verbindungen zwischen der Stützradschwinge auf der einen Seite und dem vorderen oder hinteren Hauptrahmen auf der anderen Seite ausgebildet. Beispielsweise kann es sich bei der ersten Kolben-Zylinder-Einheit um einen Hydraulikzylinder handeln.

Ferner umfasst das erfindungsgemäße Raupenlaufwerk eine zweite Kolben-Zylinder-Einheit, deren erstes Ende mit dem vorderen Hauptrahmen und deren zweites Ende mit dem hinteren Hauptrahmen gekoppelt sind. Bevorzugt erstreckt sich eine Wirkungsachse der zweiten Kolben-Zylinder-Einheit in einem Abstand von der Schwenkachse, der die beiden Hauptrahmen miteinander verbunden sind. Auf diese Weise ist die zweite Kolben-Zylinder-Einheit dazu geeignet, ein Drehmoment um die Schwenkachse auf die beiden Hauptrahmen auszuüben oder von diesen zu übernehmen.

Das erfindungsgemäße Raupenlaufwerk hat viele Vorteile. Zunächst kann eine Kraftverteilung zwischen den Haupträdern und den Stützrädern allein mittels der ersten Kolben-Zylinder-Einheit zwischen der Stützradschwinge und dem hinteren Hauptrahmen geschaffen werden. Dies ist beispielhaft anhand folgender Fallunterscheidungen veranschaulicht: Zunächst wird der Fall betrachtet, dass das vordere Hauptrad über ein Hindernis fährt und dadurch gegenüber den Stützrädern und dem hinteren Hauptrad angehoben wird. Die Anhebung des vorderen Hauptrades geht mit der Anhebung des vorderen Hauptrahmens einher, an dem die Stützradschwinge gelagert ist. An die Stützradschwinge ist gemäß vorstehender Erläuterung die erste Kolben-Zylinder-Einheit mit ihrem Schwingenende angelenkt. Dementsprechend wird auch die erste Kolben-Zylinder-Einheit ein Stück weit angehoben. Die Beträge der Anhebungen des vorderen Hauptrads und der ersten Kolben-Zylinder-Einheit stehen im Verhältnis ihrer jeweiligen Abstände bezogen auf die Schwenkachse, um die der vordere Hauptrahmen im Zuge der Anhebung des vorderen Hauptrades verschwenkt wird. Da die erste Kolben-Zylinder-Einheit an ihrem dem Schwingenende gegenüberliegenden Rahmenende mit dem hinteren Hauptrahmen gekoppelt ist, wird entsprechend der Anhebung der ersten Kolben-Zylinder-Einheit auch der hintere Hauptrahmen ein Stück weit angehoben. Da sowohl die Stützradschwinge gelenkig an dem Stützrahmen als auch der hintere Hauptrahmen gelenkig an dem hinteren Hauptrad angeordnet sind, bleiben das hintere Hauptrad und die Stützräder auf ihrem bisherigen Höhenniveau und werden mithin nicht von dem Untergrund abgehoben. Die erste Kolben-Zylinder-Einheit stellt dabei sicher, dass die Stützräder weiterhin zur Abtragung von Kräften herangezogen werden und mithin zum Kraftabtrag der jeweiligen Arbeitsmaschine bis in den Untergrund beitragen.

In dem zweiten hier betrachteten Fall überfahren die Stützräder ein Hindernis und werden dementsprechend angehoben. Dies geht ebenfalls mit einer Anhebung der Stützradschwinge einher, an die die erste Kolben-Zylinder-Einheit angelenkt ist. Da die Stützradschwinge im Übrigen mit dem vorderen Hauptrahmen lediglich unter Ausbildung eines Gelenks verbunden ist, wird der vordere Hauptrahmen lediglich indirekt bewegt, nämlich infolge einer Anhebung des hinteren Hauptrahmens über die erste Kolben-Zylinder-Einheit und einer damit einhergehenden Anhebung der Verbindungsstelle, an der der vordere Hauptrahmen unter Ausbildung der Gelenkachse mit dem hinteren Hauptrahmen verbunden ist. Da das vordere Hauptrad unter Ausbildung seiner Drehachse dem vorderen Hauptrahmen zugeordnet ist, geht die Verschwenkung des vorderen Hauptrahmens nicht mit einer Anhebung des vorderen Hauptrads einher. Letzteres steht demzufolge weiterhin über den Laufgurt in Kontakt mit dem Untergrund und kann hierdurch auf das Raupenlaufwerk einwirkende Kräfte in den Untergrund ableiten. Für das hintere Hauptrad gilt dies analog.

Das vorstehend beschriebene Prinzip gilt bei einer Anhebung des hinteren Hauptrades infolge des Überfahrens eines Hindernisses analog, wobei die Einleitung von Kräften in die Stützräder über die erste Kolben-Zylinder-Einheit erfolgt.

Mithin hat das erfindungsgemäße Raupenlaufwerk den besonderen Vorteil, dass es in der einfachsten Ausgestaltung mit lediglich mit der ersten Kolben-Zylinder-Einheit sicherstellt, dass fortwährend ein zuverlässiger Abtrag von Kräften über die beiden Haupträder und die beiden Stützräder in den Untergrund erfolgt. Hierdurch kann das Raupenlaufwerk besonders einfach konstruiert werden, wobei auf eine zweite Kolben-Zylinder-Einheit, derer es im Stand der Technik zur Sicherstellung dieser Funktionalität bedarf, verzichtet werden kann.

Die zweite Kolben-Zylinder-Einheit, über die das Raupenlaufwerk gleichwohl verfügt, dient demgegenüber anderen Zwecken und bietet mehrere Vorteile. Ein erster wesentlicher Vorteil ist die passive und/oder aktive Entgegenwirkung gegen ein sog. "Aufstellen" des Raupenlaufwerks infolge der in dem Laufgurt wirkenden Gurtspannung. Das "Aufstellen" kann auftreten, wenn Kräfte, die auf die beiden Hauptrahmen wirken, gegenüber der Schwenkachse effektiv ein Drehmoment erzeugen, das dazu führt, dass sich die Hauptrahmen relativ zueinander um die Schwenkachse verschwenken. Um dies weitestgehend zu vermeiden, ist es zunächst zu bevorzugen, wenn sich die Schwenkachse bei Vorliegen des Raupenlaufwerks in einer Mitteillage, in der beide Haupträder und die Stützräder gemeinsam auf einem ebenen Untergrund aufstehen, in einer Nulllage höhenmäßig mittig zwischen einem oberen Abschnitt des Laufgurts ("Obertrum") und einem unteren Abschnitt des Laufgurts ("Untertrum") befindet. Auf diese Weise erzeugt der Laufgurt als solcher mit seiner Gurtspannung keine Drehmomente um die Schwenkachse, da die in dem Obertrum und dem Untertrum wirkenden Kräfte jeweils denselben Hebelarm bezogen auf die Schwenkachse aufweisen und sich damit gewissermaßen gegenseitig "auslöschen".

Gemäß obiger Erläuterung kommt es bei der Verwendung des Raupenlaufwerks jedoch unweigerlich zu Auslenkungen einzelner Räder, wodurch sich die Schwenkachse vertikal bewegt, nämlich ausgehend von ihrer Nulllage nach oben. Dies hat zur Folge, dass sich die vertikal gemessenen Abstände der Schwenkachse von dem Untertrum und dem Obertrum des Laufgurts verändern und insbesondere nicht mehr gleich sind. Das Ergebnis einer solchen Bewegung der Schwenkachse ist, dass die in dem Laufgurt wirkenden Kräfte ein Drehmoment auf die beiden Hauptrahmen um die Schwenkachse erzeugen. Da die Auslenkung der Schwenkachse in aller Regel nach oben stattfindet, ist der Abstand bzw. Hebelarm für die in dem Untertrum wirkenden Kräfte bezogen auf die Schwenkachse größer, sodass das System der beiden Hauptrahmen statisch bestrebt ist, die Hauptrahmen unterhalb der Schwenkachse aufeinander zuzubewegen, das heißt in einer Seitenansicht des Raupenlaufwerks betrachtet den vorderen Hauptrahmen gegen den Uhrzeigersinn und den hinteren Hauptrahmen mit dem Uhrzeigersinn aufeinander zuzudrehen. In der Folge wird die Schwenkachse weiter vertikal nach oben bewegt und das von dem Laufgurt induzierte beschriebene Drehmoment wird weiter verstärkt. Das System verstärkt sich entsprechend selbst.

Die zweite Kolben-Zylinder-Einheit dient dazu, ebendieser Bewegung der Schwenkachse nach oben entgegenzuwirken und dadurch das sogenannte "Aufstellen" des Raupenlaufwerks zumindest zu vermindern oder zu begrenzen. Dies wird dadurch erreicht, dass die zweite Kolben-Zylinder-Einheit infolge ihrer Koppelung mit den beiden Hauptrahmen ihrerseits aktiv oder passiv Kräfte auf die beiden Hauptrahmen ausübt und diese dadurch in ihrer relativen Schwenkbewegung behindern kann. Bevorzugt kann die zweite Kolben-Zylinder-Einheit aktiv die beiden Hauptrahmen mit einem gegenseitigen Drehmoment um die gemeinsame Schwenkachse beaufschlagen. Auf diese Weise ist die zweite Kolben-Zylinder-Einheit, die beispielsweise einfachwirkend oder doppelwirkend ausgebildet sein kann, dazu geeignet, dem vorstehend beschriebenen Aufstellen des Raupenlaufwerks aktiv entgegenzuwirken, wenn die Schwenkachse sich aus ihrer Nulllage heraus nach oben bewegt und infolgedessen durch die Gurtspannung des Laufgurts Drehmomente in die Hauptrahmen eingetragen werden.

Ein weiterer wesentlicher Vorteil der zweiten Kolben-Zylinder-Einheit besteht darin, dass diese eine bedarfsgerechte aktive Anhebung oder Absenkung der beiden Haupträder vornehmen kann. Dies ist insbesondere dann möglich, wenn die zweite Kolben-Zylinder-Einheit aktiv ausgebildet ist, das heißt mindestens ein Arbeitsraum der zweiten Kolben-Zylinder-Einheit mit einer Druckeinrichtung wirkverbunden ist, die eine Druckquelle umfasst oder mit einer solchen zusammenwirkt. Mittels einer solchen Druckquelle kann der Arbeitsraum mit einem hydraulischen Druck beaufschlagt werden. Auf diese Weise ist die zweite Kolben-Zylinder-Einheit dazu geeignet, die beiden Hauptrahmen aktiv mit einem einander entgegengesetzten Drehmoment um die gemeinsame Schwenkachse zu beaufschlagen. Mit anderen Worten ist die zweite Kolben-Zylinder-Einheit dazu vorgesehen, aktiv Kräfte auf die beiden Hauptrahmen auszuüben. Beispielsweise kann es sich bei der zweiten Kolben-Zylinder-Einheit um einen Hydraulikzylinder handeln.

Dies hat den Vorteil, dass die beiden Hauptrahmen aktiv relativ zueinander um die Schwenkachse verschwenkt werden können und nicht nur eine (aktive oder passive) Gegenwirkung zu einer möglichen Aufstellung des Raupenlaufwerks infolge wirkender Gurtspannungen bewirkt werden kann. Beispielsweise können mittels des Betriebs der zweiten Kolben-Zylinder-Einheit die beiden Hauptrahmen aktiv oberhalb der Schwenkachse aufeinander zu geschwenkt werden. Dies führt zu einem Anheben der beiden Haupträder bzw. zu einer Entlastung der beiden Haupträder in solcher Weise, dass eine Ableitung einer auf das Raupenlaufwerk einwirkenden Nutzlast anteilsmäßig verstärkt über die Stützräder stattfindet und zu einem entsprechend geringeren Maß über die Haupträder. Im Extremfall können die Haupträder vollständig vom Untergrund abgehoben werden, sodass sie zur Ableitung der Nutzlast in den Untergrund nicht mehr beitragen.

Eine solche Beeinflussung der Kraftverteilung auf die einzelnen Räder bewusst abweichend von einer möglichst gleichen Verteilung, für die während eines normalen Erntebetriebs die erste Kolben-Zylinder-Einheit gemäß obiger Erläuterung sorgt, kann in für verschiedene Betriebszustände der jeweiligen Arbeitsmaschine vorteilhaft sein. Beispielsweise können die Haupträder im Zuge eines Wendemanövers in einem Vorgewende entlastet werden, um den Untergrund vor einem Eintrag von hohen Scherkräften über die ganze Länge des Raupenlaufwerkst zu schützen. Ebenfalls ist ein solches Anheben beispielsweise bei einer Straßenfahrt der Arbeitsmaschine vorteilhaft, die unweigerlich mit Kurvenfahrten einhergeht. Das Anheben der Haupträder erleichtert solche Kurvenfahrten erheblich und schont dabei den Laufgurt vor übermäßigem Verschleiß.

In einer vorteilhaften Ausgestaltung des Raupenlaufwerks ist die erste Kolben-Zylinder-Einheit dazu vorgesehen und eingerichtet, Bewegungen, die die Stützräder und der hintere Hauptrahmen relativ zueinander ausführen, zu dämpfen. Um dies zu bewirken, kann es besonders vorteilhaft sein, wenn mindestens ein Arbeitsraum der ersten Kolben-Zylinder-Einheit, vorzugsweise ein zylinderseitiger Arbeitsraum, mit einer Druckeinrichtung zusammenwirkt. Dies kann beispielsweise eine passiven Druckeinrichtung in Form eines Gasspeichers sein. Mit dieser Ausgestaltung kann die erste Kolben-Zylinder-Einheit als Gasfeder wirken. Hierdurch ist sichergestellt, dass ein guter Fahrkomfort für die jeweilige Arbeitsmaschine, an der das Raupenlaufwerk angeordnet ist, gegeben ist. Insbesondere können schlagartige Auslenkungen infolge des Überfahrens von Hindernissen und dadurch entstehende Kräfte gedämpft werden. Neben einer Verbesserung des Fahrkomforts werden hierdurch auch die Komponenten des Raupenlaufwerks sowie der jeweiligen Arbeitsmaschine insgesamt geschont.

Des Weiteren kann es betreffend die erste Kolben-Zylinder-Einheit besonders vorteilhaft sein, wenn diese doppelwirkend ausgebildet ist. Dies ist beispielsweise derart umgesetzt, dass ein erster Arbeitsraum (beispielsweise der kolbenseitige Arbeitsraum) der ersten Kolben-Zylinder-Einheit mit einer aktiven Druckeinrichtung zusammenwirkt und dadurch aktiv mit Druck beaufschlagbar ist. Hierdurch kann ein Druck in dem zweiten Arbeitsraum (in diesem Beispiel der zylinderseitige Arbeitsraum) eingestellt werden. Für die Beaufschlagung des jeweiligen Arbeitsraums mit hydraulischem Druck kann dieser Arbeitsraum beispielsweise mit einer Druckeinrichtung zusammenwirken, die eine Druckquelle umfasst oder mit einer solchen zusammenwirkt. Letztere kann beispielsweise von einer Hydraulikpumpe gebildet sein. Eine Anbindung des jeweiligen Arbeitsraums an ein Hydrauliksystem der Arbeitsmaschine, an die das Raupenlaufwerk angeschlossen ist, ist denkbar.

Die Einstellung des hydraulischen Drucks in dem zweiten Arbeitsraum der ersten Kolben-Zylinder-Einheit kann bevorzugt derart erfolgen, dass sich der Druck innerhalb eines voreingestellten Bereichs befindet. Mit anderen Worten kann mittels des Aufbringens eines Drucks in dem ersten Arbeitsraum ein Druckniveau in dem zweiten Arbeitsraum bewusst innerhalb eines bestimmten Bereichs gehalten werden. Dies hat den Vorteil, dass die erste Kolben-Zylinder-Einheit in einem vorteilhaften Bereich seiner Kennlinie gehalten werden kann, das heißt die dämpfenden Eigenschaften der ersten Kolben-Zylinder-Einheit in besonders vorteilhafter Weise ausgenutzt werden können.

Beispielsweise ist es denkbar, dass die erste Kolben-Zylinder-Einheit dafür ausgelegt ist, große Kräfte über das Raupenlaufwerk in den Untergrund einzuleiten. Dies ist gleichbedeutend damit, dass die erste Kolben-Zylinder-Einheit zwischen ihrem Schwingenende und ihrem Rahmenende große Kräfte überträgt. Die Auslegung der ersten Kolben-Zylinder-Einheit für einen solchen Lastfall, der sinnvollerweise einen Großteil eines typischen Nutzungsprofils der jeweiligen Arbeitsmaschine ausmacht, bedeutet, dass die Dämpfungscharakteristik der ersten Kolben-Zylinder-Einheit für diesen Lastfall optimiert ist. Falls ein anderer Lastfall auftritt, bei dem das Raupenlaufwerk beispielsweise deutlich geringere Kräfte in den Untergrund ableiten muss, wirkt die erste Kolben-Zylinder-Einheit typischerweise abseits eines bestmöglichen Betriebspunkts, das heißt die Dämpfungscharakteristik ist nicht ideal. In einem solchen Fall kann mittels der Druckeinrichtung ein zusätzlicher hydraulischer Druck auf den einen Arbeitsraum aufgebracht werden, um eine höhere Belastung des Raupenlaufwerks gewissermaßen zu "simulieren". Der Druck in dem zweiten Arbeitsraum steigt an, sodass die erste Kolben-Zylinder-Einheit trotz der vergleichsweise geringen Nutzlast, die in das Raupenlaufwerk eingeleitet wird, in einem Idealbereich ihrer Kennlinie gehalten wird. Im Ergebnis ist die Dämpfungscharakteristik der ersten Kolben-Zylinder-Einheit beeinflussbar, sodass sie über einen weiten Lastbereich hinweg gut wirken kann.

Entsprechend kann es von Vorteil sein, wenn die erste Kolben-Zylinder-Einheit derart eingerichtet ist, dass ein Druck in der ersten Kolben-Zylinder-Einheit, beispielsweise in einem zylinderseitigen Arbeitsraum derselben, bei kleineren Nutzlasten, die auf das Raupenlaufwerk einwirken, zumindest im Wesentlichen gleich groß ist wie bei der Einwirkung demgegenüber größerer Nutzlasten. Mit anderen Worten soll das Druckniveau in der ersten Kolben-Zylinder-Einheit möglichst innerhalb eines voreingestellten Bereichs liegen, der ein gutmütiges Dämpfungsverhalten der ersten Kolben-Zylinder-Einheit ermöglicht.

Weiterhin kann eine solche Ausgestaltung des Raupenlaufwerks vorteilhaft sein, bei der mindestens einer Kolben-Zylinder-Einheit, vorzugsweise sämtlichen Kolben-Zylinder-Einheiten, mindestens eine Druckeinrichtung zugeordnet ist. Hierbei kann es sich um eine passive oder um eine aktive Druckeinrichtung handeln.

Eine "passive Druckeinrichtung" kann im Sinne der vorliegenden Anmeldung insbesondere von einem Gasspeicher gebildet sein. Ein solcher umfasst in der Regel zwei durch eine Membran fluidtechnisch getrennte Druckräume, wobei der eine Druckraum mit unter Druck stehendem Gas gefüllt ist ("Gasraum") und der andere Druckraum ("Fluidraum") mit einem hydraulischen Fluid eines hydraulischen Systems in strömungstechnischem Kontakt steht, wobei zu dem hydraulischen System mindestens ein Arbeitsraum einer jeweiligen Kolben-Zylinder-Einheit gehört. Auf diese Weise kann das hydraulische Fluid aus dem Arbeitsraum der Kolben-Zylinder-Einheit verdrängt werden und in den Fluidraum des Gasspeichers einströmen, wobei im Zuge dessen die Membran verformt und das Gas, das sich in dem Gasraum befindet, komprimiert werden. Das Gas baut hierdurch einen steigenden Gegendruck auf. Umgekehrt drückt das Gas die Membran - und mithin das in dem Fluidraum befindliche hydraulische Fluid - wieder zurück in den Arbeitsraum der Kolben-Zylinder-Einheit, sobald sich das Volumen des letzteren vergrößert bzw. ein Gegendruck eines Kolbens der Kolben-Zylinder-Einheit absinkt und den in dem Gasraum der Druckeinrichtung herrschenden Druck unterschreitet. In diesem Fall drückt die Druckeinrichtung effektiv den Kolben der Kolben-Zylinder-Einheit zurück. Diese Prozesse sind im Sinne der vorliegenden Anmeldung passiv, da die Druckeinrichtung nicht dazu vorgesehen und eingerichtet ist, aktiv einen veränderlichen Druck auf das hydraulische System auszuüben, beispielsweise mittels einer Pumpe. Zwar kann die passive Druckeinrichtung vorgespannt sein und somit einen Druck auf das hydraulische System ausüben. Im Übrigen reagiert sie jedoch nur auf von außen in das hydraulische System eingebrachte Veränderungen.

Eine "aktive Druckeinrichtung" ist im Gegensatz dazu im Sinne der vorliegenden Anmeldung eine solche, mittels der ein Druck in einem hydraulischen System aktiv veränderbar ist. Hierzu kann die Druckeinrichtung mit einer Druckquelle, beispielsweise einer Pumpe, zusammenwirken, von einer Druckquelle gebildet sein oder eine Druckquelle umfassen. Bevorzugt umfasst auch eine aktive Druckeinrichtung ein passives Element, beispielsweise in Form eines beschriebenen Gasspeichers. Folglich ist eine Gesamtheit aus einer passiven Druckeinrichtung in Zusammenwirkung mit einer Druckquelle im Sinne der vorliegenden Anmeldung auch als "aktive Druckeinrichtung" auffassbar.

Gemäß den vorstehenden Erläuterungen ist eine solche Ausgestaltung besonders zu bevorzugen, bei der die erste Kolben-Zylinder-Einheit doppelwirkend ausgebildet ist, wobei ein erster Arbeitsraum, vorzugweise der kolbenseitige Arbeitsraum, mit einer aktiven Druckeinrichtung und ein zweiter Arbeitsraum, vorzugsweise der zylinderseitige Arbeitsraum, mit einer passiven Druckeinrichtung zusammenwirken. Hierdurch kann die erste Kolben-Zylinder-Einheit in der vorstehend erläuterten Weise ein über weite Nutzlastbereiche möglichst optimale Dämpfung bewirken. Die zweite Kolben-Zylinder-Einheit ist bei dieser Ausgestaltung einfachwirkend ausgebildet, wobei ein Arbeitsraum (entweder ein kolbenseitiger oder ein zylinderseitiger Arbeitsraum) mit einer aktiven Druckeinrichtung zusammenwirkt. Die zweite Kolben-Zylinder-Einheit kann somit sowohl dem beschriebenen Aufstellen des Raupenlaufwerks entgegenwirken als auch ein Anheben oder Absenken der beiden Haupträder bewirken. Nach allem umfasst das Raupenlaufwerk bei dieser Ausgestaltung insgesamt drei Druckeinrichtungen, von denen zwei der ersten Kolben-Zylinder-Einheit und eine der zweiten Kolben-Zylinder-Einheit zugeordnet sind.

In einer vorteilhaften Ausgestaltung des Raupenlaufwerks ist das die Kolben-Zylinder-Einheit derart ausgerichtet, dass eine in sich gerade Gliedachse der ersten Kolben-Zylinder-Einheit, die das Schwingenende und das Rahmenende der ersten Kolben-Zylinder-Einheit miteinander verbindet, höchstens um 15°, vorzugsweise höchstens um 10°, weiter vorzugsweise höchstens um 5°, gegen eine Vertikale geneigt orientiert ist. Diese Ausgestaltung hat den Vorteil, dass die Kraftverteilung zwischen den Haupträdern und den Stützrädern besonders einfach bewerkstelligt werden kann. Insbesondere sind keine übrigen ausgleichenden Elemente oder dergleichen erforderlich, die eine betragsmäßig gewünschte Krafteinleitung in die Stützradschwinge und die Stützräder sicherstellen.

Ferner kann es besonders von Vorteil sein, wenn die Schwenkachse der beiden Hauptrahmen und die Maschinenachse zusammenfallen. Bei dieser Ausgestaltung weist das Raupenlaufwerk ein zentrales Hauptgelenk auf, das die Anlenkstelle bildet und an dem es unter Ausbildung der Maschinenachse an eine jeweilige Achse einer Arbeitsmaschine angeschlossen ist. An diesem zentralen Hauptgelenk ist ferner die Schwenkachse ausgebildet, an der der vordere Hauptrahmen und der hintere Hauptrahmen miteinander schwenkbeweglich verbunden sind. Bevorzugt befindet sich die Anlenkstelle - und mithin die Maschinenachse und die Schwenkachse - in Längsrichtung des Raupenlaufwerks betrachtet mittig an dem Raupenlaufwerk, sodass ein horizontal gemessener Abstand der Drehachse des vorderen Hauptrads von der Schwenkachse zumindest im Wesentlichen genauso groß ist wie ein horizontal gemessener Abstand der Drehachse des hinteren Hauptrades von der Schwenkachse. Diese Ausgestaltung trägt ebenfalls zu einer Vereinfachung des Raupenlaufwerks bei, da die Kinematik der möglichen Relativbewegungen der einzelnen Elemente zueinander gegenüber einer Ausgestaltung, bei der die Schwenkachse und Maschinenachse getrennt voneinander angeordnet sind, vereinfacht ist. Weiterhin ist es zu bevorzugen, wenn sich die Schwenkachse bzw. Maschinenachse bei Vorliegen des Raupenlaufwerks in einer Mittellage höhenmäßig mittig zwischen dem Obertrum und dem Untertrum des Laufgurts befinden.

In einer weiterhin vorteilhaften Ausgestaltung sind das Schwingenende und das Rahmenende der ersten Kolben-Zylinder-Einheit in Längsrichtung des Raupenlaufwerks betrachtet auf derselben Seite einer vertikal orientierten Mittelebene angeordnet, die die Schwenkachse beinhaltet und die senkrecht zu einer von dem Laufgurt aufgespannten Laufgurtebene orientiert ist. Diese Mittelebene trennt das Raupenlaufwerk gedanklich in einen vorderen Abschnitt und einen hinteren Abschnitt, wobei der vordere Abschnitt den vorderen Hauptrahmen und das vordere Hauptrad sowie der hintere Abschnitt den hinteren Hauptrahmen und das hintere Hauptrad umfassen. Gemäß vorstehender Beschreibung befindet sich die Schwenkachse bevorzugt in Übereinstimmung ihrer Lage mit der Maschinenachse und weiterhin bevorzugt in einer in Längsrichtung betrachteten Mitte des Raupenlaufwerks.

Die Anordnung der ersten Kolben-Zylinder-Einheit auf einer Seite der Mittelebene, vorzugsweise auf der Seite des vorderen Abschnitts, trägt zu einer besonders einfachen Kinematik des Raupenlaufwerks bei. Hierbei kann über den Abstand der ersten Kolben-Zylinder-Einheit von der Schwenkachse das Kräfteverhältnis eingestellt werden, in dem die Stützradschwinge und mithin die Stützräder mit Kräften beaufschlagt bzw. zur Ableitung von Kräften in den Untergrund herangezogen werden. Dabei gilt, dass die Stützräder eine umso größere Kraftabtragung bewirken, desto näher sich das Schwingenende der ersten Kolben-Zylinder-Einheit entlang der Stützradschwinge betrachtet an dem Stützrahmen befindet. Beispielsweise kann das Schwingenende genau in der Mitte der Stützradschwinge angeordnet sein, sodass Kräfte, die mittels der ersten Kolben-Zylinder-Einheit in die Stützradschwinge eingeleitet werden, sich hälftig auf die Anlenkung der Stützradschwinge an den vorderen Hauptrahmen und den Stützrahmen aufteilen. Eine Verlagerung des Schwingenendes entlang der Stützradschwinge führt entsprechend zu einer von der hälftigen Aufteilung abweichenden Aufteilung der Kräfte auf den vorderen Hauptrahmen und den Stützrahmen. Bevorzugt befindet sich das Schwingenende der ersten Kolben-Zylinder-Einheit in eine Richtung parallel zu der Längsachse des Raupenlaufwerks betrachtet in einem Abstand von der Schwenkachse von höchstens 1/4, vorzugsweise höchstens einem 1/6, weiter vorzugsweise höchstens 1/8, eines entsprechend gemessenen Radabstands zwischen den Drehachsen der Haupträder.

Weiterhin kann eine solche Ausgestaltung des Raupenlaufwerks vorteilhaft sein, bei der die Drehachsen der beiden Haupträder und die Schwenkachse zumindest bei Vorliegen des Raupenlaufwerks in der Mittellage zumindest im Wesentlichen auf einem gemeinsamen Höhenniveau liegen. Die Schwenkachse befindet sich bei Vorliegen des Raupenlaufwerks in dessen Mittellage bevorzugt in ihrer Nulllage. Die Mittellage des Raupenlaufwerks beschreibt dabei im Sinne der vorliegenden Anmeldung einen Zustand des Raupenlaufwerks, in dem selbiges auf einem ebenen Untergrund aufsteht, das heißt weder die Haupträder noch die Stützräder ein Hindernis überfahren. Eine solche Mittellage eines Raupenlaufwerks ist in den Figuren des Ausführungsbeispiels jeweils veranschaulicht. Sofern es zu einer Auslenkung der Schwenkachse ausgehend von ihrer Nulllage in vertikale Richtung kommt, kann es zu dem oben erläuterten Aufstellen des Raupenlaufwerks kommen, dem die zweite Kolben-Zylinder-Einheit entgegenwirkt.

Die vorliegende Aufgabe wird erfindungsgemäß ferner mittels einer landwirtschaftlichen Arbeitsmaschine mit den Merkmalen des Anspruchs 15 gelöst.

Die Arbeitsmaschine umfasst eine Karosserie sowie zwei Raupenlaufwerke, nämlich ein linkes und ein rechtes Raupenlaufwerk. Die Raupenlaufwerke sind jeweils über eine Anlenkstelle mit der Karosserie verbunden. Insbesondere können die Raupenlaufwerke an eine Vorderachse der Arbeitsmaschine angeschlossen sein. Die Arbeitsmaschine ist dadurch gekennzeichnet, dass mindestens eines der Raupenlaufwerke, vorzugsweise beide Raupenlaufwerke, von einem erfindungsgemäßen Raupenlaufwerk gemäß der vorliegenden Anmeldung gebildet ist bzw. sind. Die sich hierdurch ergebenden Vorteile sind vorstehend bereits dargelegt.

Die Erfindung ist nachstehend anhand eines Ausführungsbeispiels, das in den Figuren dargestellt ist, näher erläutert. Es zeigt:
- Fig. 1:: Eine schematische Seitenansicht einer landwirtschaftlichen Arbeitsmaschine, die mit zwei Raupenlaufwerken ausgestattet ist,
- Fig. 2:: Ein Querschnitt durch ein Raupenlaufwerk,
- Fig. 3:: Eine Prinzipdarstellung eines erfindungsgemäßen Raupenlaufwerks.

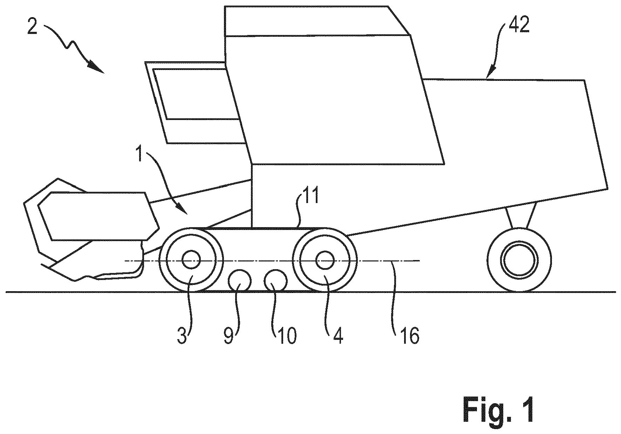

In **Figur 1** ist eine landwirtschaftliche Arbeitsmaschine **2** in Form eines selbstfahrenden Mähdreschers dargestellt, dessen Karosserie **42** mit zwei Raupenlaufwerken 1 zusammenwirkt. Die Raupenlaufwerke **1** sind hier an eine Vorderachse der Arbeitsmaschine **2** angeschlossen. Das Raupenlaufwerk **1** verfügt über ein vorderes Hauptrad **3,** ein hinteres Hauptrad **4** sowie zwei Stützräder **9, 10.** Ferner umfasst das Raupenlaufwerk **1** einen Laufgurt **11,** der die beiden Haupträder **3, 4** umspannt. Die Haupträder **3, 4** sind entlang einer Längsachse **16** des Raupenlaufwerks **1** betrachtet einander gegenüberliegend angeordnet. Die Stützräder **9, 10** sind in einem Zwischenbereich zwischen den Haupträdern **3, 4** angeordnet. Insgesamt findet ein Abtrag von Kräften, die von der Arbeitsmaschine **2** in das Raupenlaufwerk **1** abgeleitet werden, sowohl über die Haupträder **3, 4** als auch über die Stützräder **9, 10** in einen Untergrund statt.

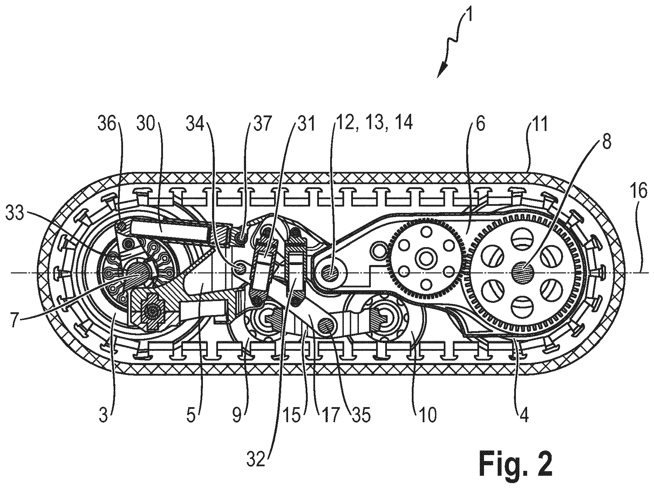

Die Konstruktion eines erfindungsgemäßen Raupenlaufwerks **1** ist in seinen Grundzügen gleich zu anderen Raupenlaufwerken. Ein solches ist beispielhaft in **Figur 2** dargestellt. Das dortige Raupenlaufwerk **1** verfügt über einen vorderen Hauptrahmen **5** und einen hinteren Hauptrahmen **6.** Die beiden Hauptrahmen **5, 6** sind an einer mittigen Anlenkstelle **12** des Raupenlaufwerks **1** unter Ausbildung einer Schwenkachse **14** in relativ zueinander verschwenkbarer Weise miteinander verbunden. In dem gezeigten Beispiel fällt die Schwenkachse **14** mit einer an der Anlenkstelle **12** ausgebildeten Maschinenachse **13** zusammen, um die das Raupenlaufwerk **1** als Ganzes um eine jeweilige Achse der Arbeitsmaschine **2** verschwenkbar gelagert ist. Die Maschinenachse **13** und die Schwenkachse **14** sind horizontal sowie senkrecht zu einer Gurtebene orientiert, die von dem Laufgurt **11** aufgespannt wird. In **Figur 2** ist die Gurtebene von der Zeichnungsebene gebildet bzw. zu dieser parallel.

Ferner ist die Schwenkachse **14** bezogen auf eine entlang der Längsachse **16** des Raupenlaufwerks **1** gemessene Länge des Raupenlaufwerks **1** mittig angeordnet, sodass eine vertikale Mittelebene **29,** die ebenfalls senkrecht zu der Gurtebene des Laufgurts **11** orientiert ist und die Schwenkachse **14** beinhaltet, das Raupenlaufwerk **1** in zwei zumindest im Wesentlichen gleich große Abschnitte teilt, nämlich einen vorderen Abschnitt und einen hinteren Abschnitt. Der vordere Abschnitt beinhaltet den vorderen Hauptrahmen **5** und das vordere Hauptrad **3,** während der hintere Abschnitt den hinteren Rahmen **6** und das hintere Hauptrad **4** umfasst. Ferner befindet sich bei Vorliegen des Raupenlaufwerks **1** in einer Mittellage, die in **Figur 2** veranschaulicht ist, die Schwenkachse **14** in einer Nulllage, in der sie vertikale Richtung betrachtet, das heißt bezogen auf eine Höhe des Raupenlaufwerks **1,** mittig angeordnet ist, sodass ein vertikal gemessener Abstand der Schwenkachse **14** von einem Untertrum **39** des Laufgurts **11** genauso groß ist wie ein vertikal gemessener Abstand der Schwenkachse **14** von einem Obertrum **38** des Laufgurts **11.** Hierdurch bedingt bewirken infolge einer Gurtspannung des Laufgurts **11** in dem Laufgurt **11** wirkende Kräfte kein Drehmoment um die Schwenkachse **14,** solange sich letztere in ihrer in **Figur 2** dargestellten Nulllage befindet.

An den vorderen Hauptrahmen **5** ist eine Stützradschwinge **17** unter Ausbildung eines Gelenks **34** angelenkt. An einem dem Gelenk **34** gegenüberliegenden Ende der Stützradschwinge **17** ist letztere - ebenfalls unter Ausbildung eines Gelenks **35** - mit einem Stützrahmen **15** verbunden. An diesem Stützrahmen **15** sind die beiden Stützräder **9, 10** jeweils drehbeweglich gelagert.

In dem gezeigten Beispiel ist das vordere Hauptrad **3** lediglich mittelbar an dem vorderen Hauptrahmen **5** gelagert. Dies erfolgt hier derart, dass das vordere Hauptrad **3** an einem Schwenkarm **33** gelagert ist, der wiederum gelenkig an dem vorderen Hauptrahmen **5** gelagert ist. Auf diese Weise kann ein Abstand der Drehachse **7** des vorderen Hauptrades **3** von der Schwenkachse **14** mittels Verschwenkens des Schwenkarms **33** relativ zu dem vorderen Hauptrahmen **5** verändert werden. Dies wird dazu genutzt, die Gurtspannung des Laufgurts **11** ein- bzw. nachzustellen. Um dies zu erreichen, umfasst das gezeigte Raupenlaufwerk **1** einen von einer Kolben-Zylinder-Einheit gebildeten Bandspannzylinder **30,** der mit seinem ersten Ende **36** an dem Schwenkarm **33** und mit seinem zweiten Ende **37** an dem vorderen Hauptrahmen **5** gelagert ist. Mittels einer Veränderung der Auslenkung des Bandspannzylinders **30** kann der Schwenkarm **33** relativ zu dem Hauptrahmen **5** verschwenkt werden, wodurch in der beschriebenen Weise die Drehachse **7** horizontal verlagert wird und sich dadurch ihr horizontal gemessener Abstand von der Drehachse **8** des hinteren Hauptrads **4** verändert. Entsprechend wird mittels einer solchen Bewegung die Gurtspannung des Laufgurts **11** verändert.

Das gezeigte Raupenlaufwerk **1** umfasst ferner zwei weitere Kolben-Zylinder-Einheiten **31, 32,** wobei die erstgenannte den vorderen Hauptrahmen **5** mit dem hinteren Hauptrahmen **6** und die zweitgenannte die Stützradschwinge **17** mit dem vorderen Hauptrahmen **5** koppeln. In Zusammenwirkung sind die Kolben-Zylinder-Einheiten **31, 32** dazu vorgesehen und eingerichtet, eine Verteilung der auf das Raupenlaufwerk **1** wirkenden Kräfte auf die Haupträder **3, 4** und die Stützräder **9, 10** zu bewirken. Die Aufgabe besteht in aller Regel darin, die Kräfte möglichst gleichmäßig über die Haupträder **3, 4,** und die Stützräder **9, 10** in den Untergrund abzuleiten. Hierzu können Arbeitsräume der beiden Kolben-Zylinder-Einheiten **31, 32** strömungstechnisch miteinander gekoppelt sein, sodass die Verdrängung eines hydraulischen Fluids aus einem Arbeitsraum der einen Kolben-Zylinder-Einheit **31, 32** zu einem entsprechenden Zufluss des Fluids in einen Arbeitsraum der jeweils anderen Kolben-Zylinder-Einheit **31, 32** zur Folge hat. Hierdurch werden die Komponenten vorderer Hauptrahmen **5,** hinterer Hauptrahmen **6** und Stützradschwinge **17** bzw. Stützrahmen **15** kinematisch miteinander gekoppelt, um die genannte Kraftverteilung zu bewirken und insbesondere die Räder **3, 4, 9, 10** durchgehend in Kontakt mit dem Untergrund zu halten. Diese soll insbesondere auch dann erhalten bleiben, wenn die Räder **3, 4, 9, 10** bei Überfahren eines Hindernisses verschiedentlich angehoben werden.

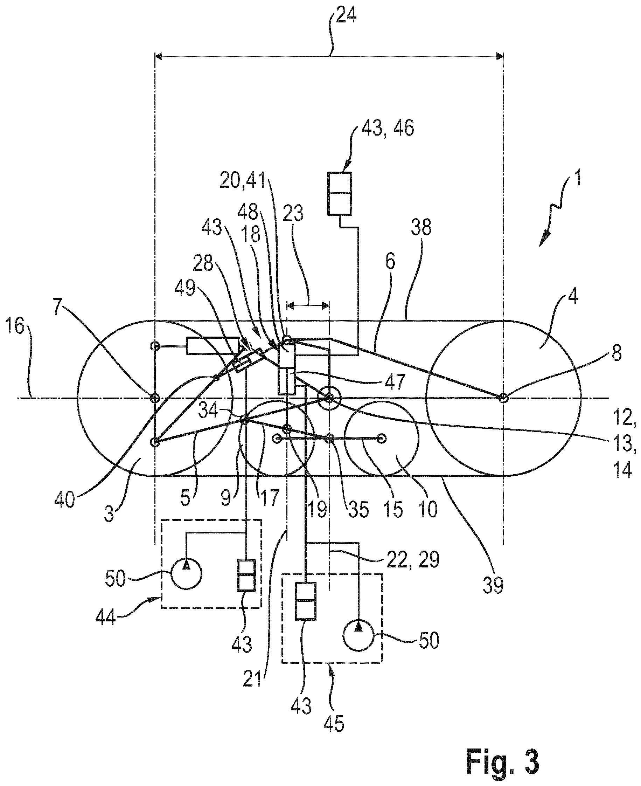

Ein erfindungsgemäßes Raupenlaufwerk **1** ist in **Figur 3** veranschaulicht. Es umfasst eine erste Kolben-Zylinder-Einheit **18,** die mit einer ersten Druckeinrichtung **45** und einer zweiten Druckeinrichtung **46** zusammenwirkt.

Die erste Kolben-Zylinder-Einheit **18** koppelt die Stützradschwinge **17** mit dem hinteren Hauptrahmen **6.** Entsprechend ist ein Schwingenende **19** der ersten Kolben-Zylinder-Einheit **18** gelenkig mit der Stützradschwinge **17** verbunden, während ein Rahmenende **20** der ersten Kolben-Zylinder-Einheit **18** gelenkig mit dem hinteren Hauptrahmen **6** verbunden ist. Auf diese Weise wirkt die erste Kolben-Zylinder-Einheit **18** mechanisch als Pendelstab, der lediglich Normalkräfte übertragen kann, jedoch keine Übertragung von Querkräften und Drehmomenten zwischen der Stützradschwinge **17** und dem hinteren Hauptrahmen **6** ermöglicht. Die erste Kolben-Zylinder-Einheit **18** führt dazu, dass der vordere Hauptrahmen **5,** die Stützradschwinge **17** und der hintere Hauptrahmen **6** kinematisch miteinander gekoppelt sind. Auf diese Weise wird allein durch die erste Kolben-Zylinder-Einheit **18** erreicht, dass bei einer Anhebung eines der Räder **3, 4, 9, 10** die verbleibenden Räder **3, 4, 9, 10** in Kontakt mit dem Untergrund bleiben und entsprechend weiterhin ein Kraftabtrag über diese Räder **3, 4, 9, 10** in den Untergrund erfolgt. Dies ist anhand zweier Beispiele in der vorstehenden Beschreibung bereits erläutert worden.

Im Unterschied zu dem Raupenlaufwerk **1** gemäß **Figur 2** ist es demzufolge für einen geordneten Lastabtrag nicht erforderlich, zwei separate Kolben-Zylinder-Einheiten **31, 32** zu verbauen, um die Stützradschwinge **17** sowie den vorderen Hauptrahmen **5** und den hinteren Hauptrahmen **6** kinematisch miteinander zu koppeln. Entsprechend ist das erfindungsgemäße Raupenlaufwerk **1** deutlich vereinfacht, ohne dass es zu einer Einschränkung der Funktionalität kommt.

In dem gezeigten Beispiel ist die erste Kolben-Zylinder-Einheit **18** zumindest im Wesentlichen vertikal orientiert, sodass eine das Schwingenende **19** und das Rahmenende **20** verbindende Gliedachse **21** zumindest im Wesentlichen parallel zu einer Vertikalen **22** orientiert ist. Dies ergibt sich besonders gut anhand von **Figur 3****.** Ferner findet sich die erste Kolben-Zylinder-Einheit **18** vollständig auf einer Seite der Schwenkachse **14,** wobei sie sich in dem gezeigten Beispiel in dem vorderen Abschnitt des Raupenlaufwerks **1** diesseits der Mittelebene **29** befindet. Ferner ist die erste Kolben-Zylinder-Einheit **18** derart angeordnet, dass sie sich in einem horizontal gemessenen Abstand **23** von der Schwenkachse **14** befindet, der in etwa einem Achtel eines ebenfalls horizontal gemessenen Radabstands **24** zwischen den Drehachsen **7, 8** der beiden Haupträder **3, 4** entspricht. Bei dieser Anordnung wird zumindest bei Vorliegen des Raupenlaufwerks **1** in seiner in **Figur 3** gezeigten Mittellage eine an der Anlenkstelle **12** an das Raupenlaufwerk **1** übertragende Kraft zu jeweils einem Viertel über die beiden Haupträder **3, 4** und die beiden Stützräder **9, 10** in den Untergrund abgeleitet. Ferner ist in dem gezeigten Beispiel das Schwingenende **19** der Kolben-Zylinder-Einheit **18** in etwa mittig an der Stützradschwinge **17** angeordnet, sodass ein horizontal gemessener Abstand des Schwingenendes **19** von den beiden Gelenken **34, 35** gleich groß ist. Hierdurch wird bewirkt, dass eine über die erste Kolben-Zylinder-Einheit **18** auf die Stützradschwinge **17** übertragene vertikale Kraft in etwa hälftig auf den vorderen Hauptrahmen **5** und hälftig auf den Stützrahmen **15** abgeleitet wird.

Die erste Kolben-Zylinder-Einheit **18** ist in dem gezeigten Beispiel doppelwirkend ausgebildet und umfasst entsprechend einen zylinderseitigen Arbeitsraum **48** und einen kolbenseitigen Arbeitsraum **47.** Die erste Kolben-Zylinder-Einheit **18** wirkt derart mit den beiden Druckeinrichtungen **45, 46** zusammen, dass die erste Druckeinrichtung **45** dem kolbenseitigen Arbeitsraum **47** und die zweite Druckeinrichtung **46** dem zylinderseitigen Arbeitsraum **48** zugeordnet sind. Die erste Druckeinrichtung **45** ist hier von einer aktiven Druckeinrichtung gebildet. Diese umfasst in dem gezeigten Beispiel eine Druckquelle **50,** die von einer Hydraulikpumpe gebildet sein kann. Ferner umfasst die erste Druckeinrichtung **45** einen passiven Gasspeicher **43.** Auf diese Weise ist die erste Druckeinrichtung **45** dazu geeignet, Druckschwankungen in dem kolbenseitigen Arbeitsraum **47** zu dämpfen und bei Bedarf aktiv zu beeinflussen.

Die Druckquelle **50** ist mittels einer Leitung derart an den kolbenseitigen Arbeitsraum **47** angebunden, dass ein mittels der Druckquelle **50** bereitgestellter hydraulischer Druck in dem kolbenseitigen Arbeitsraum **47** der ersten Kolben-Zylinder-Einheit **18** wirkt. Mithin ist die Druckquelle **50** dazu geeignet, einen Kolben der ersten Kolben-Zylinder-Einheit **18** in den zugehörigen Zylinder einzufahren und hierbei ein Volumen des kolbenseitigen Arbeitsraums **47** zu vergrößern, während ein Volumen des zylinderseitigen Arbeitsraum **48** verkleinert wird. Hierdurch wird erreicht, dass der Druck in dem zylinderseitigen Arbeitsraum **48** erhöht und hierdurch künstlich innerhalb eines vorgegebenen Bereichs gehalten wird. Dies kann beispielsweise von Vorteil sein, wenn eine auf das Raupenlaufwerk **1** einwirkende Kraft von so geringem Betrag ist, dass der Druck in dem zylinderseitigen Arbeitsraum **48** außerhalb eines vorteilhaften Bereichs liegt. Insbesondere wird versucht, die erste Kolben-Zylinder-Einheit **18** in einem vorteilhaften Bereich ihrer Kennlinie zu halten, um die dämpfenden Eigenschaften der ersten Kolben-Zylinder-Einheit **18** bestmöglich zu nutzen. Mittels des Aufbringens eines Drucks auf den kolbenseitigen Arbeitsraum **47** kann der Druck in dem zylinderseitigen Arbeitsraum **46** derart eingestellt werden, dass er stets innerhalb eines vordefinierten, vorteilhaften Bereichs liegt. Die Dämpfungscharakteristik der ersten Kolben-Zylinder-Einheit **18** kann dadurch unabhängig von einer Belastung des Raupenlaufwerks **1** in einem günstigen Bereich ihrer Kennlinie gehalten werden.

Die zweite Druckeinrichtung **46** ist passiv und umfasst einen passiven Gasspeicher **43,** der über ein komprimierbares Gasvolumen verfügt. Das Gasvolumen des passiven Gasspeichers **43** ist mittels einer Membran von einem Hydraulikfluid getrennt, das sich in dem zylinderseitigen Arbeitsraum **48** der ersten Kolben-Zylinder-Einheit **18** befindet und über eine Leitung mit der zweiten Druckeinrichtung **46** ausgetauscht wird. Der Gasspeicher **43** der ersten Druckeinrichtung **45** ist analog konstruiert.

Die Druckeinrichtungen **45, 46** ermöglichen eine Dämpfungsfunktion, die die erste Kolben-Zylinder-Einheit **18** erfüllt. Auf diese Weise werden stoßartige Belastungen, die auf die Räder **3, 4, 9, 10** wirken, beispielsweise infolge der Überfahrt eines Hindernisses, gedämpft, um schlagartige Belastungen zu vermeiden.

Der vordere Hauptrahmen **5** und der hintere Hauptrahmen **6** sind zusätzlich mittels einer zweiten Kolben-Zylinder-Einheit **28** direkt miteinander gekoppelt. Diese ist an einem ersten Ende **40** mit dem vorderen Hauptrahmen **5** und mit einem zweiten Ende **41** mit dem hinteren Hauptrahmen **6** verbunden, sodass mittels der zweiten Kolben-Zylinder-Einheit **28** einander entgegengesetzt Kräfte unmittelbar auf den vorderen Hauptrahmen **5** und den hinteren Hauptrahmen **6** wirken können. Da sich eine Wirkungsachse der zweiten Kolben-Zylinder-Einheit **28** in einem Abstand zu der Schwenkachse **14** erstreckt, bewirkt eine von der zweiten Kolben-Zylinder-Einheit **28** ausgeübte Kraft ein Drehmoment auf die beiden Hauptrahmen **5, 6** um die Schwenkachse **14.**

Die zweite Kolben-Zylinder-Einheit **28** ist in dem gezeigten Beispiel einfachwirkend ausgebildet, wobei ein kolbenseitiger Arbeitsraum **49** der zweiten Kolben-Zylinder-Einheit **28** mit einer Druckeinrichtung **44** zusammenwirkt, die sowohl eine hydraulische Druckquelle **50** als auch einen passiven Gasspeicher **43** umfasst. Mittels der Druckquelle **50** kann der kolbenseitige Arbeitsraum **49** der zweiten Kolben-Zylinder-Einheit **28** aktiv mit hydraulischem Druck beaufschlagt werden. Da der Arbeitsraum **49** hier kolbenseitig angeordnet ist, wird ein Kolben der zweiten Kolben-Zylinder-Einheit **28** infolge der Beaufschlagung des kolbenseitigen Arbeitsraums **49** mit hydraulischem Druk in einen zugeordneten Zylinder eingefahren. Dies führt zu einer Verkürzung der zweiten Kolben-Zylinder-Einheit **28** und mithin zu einer Bewegung der beiden Enden **40, 41** der zweiten Kolben-Zylinder-Einheit **28** aufeinander zu. Zumindest bei Vorliegen des Raupenlaufwerks **1** in einer Mittellage, wie sie in **Figur 3** dargestellt ist, ist eine solche Bewegung gleichbedeutend damit, dass die beiden Haupträder **3, 4** angehoben und dadurch entlastet werden, während die beiden Stützräder **9,10** einen höheren Anteil zum Abtrag der auf das Raupenlaufwerk **1** einwirkenden Kräfte beitragen. Auf diese Weise ist es möglich, gezielt die über die beiden Haupträder **3, 4** in den Untergrund abgeleitet Kräfte zu reduzieren, was beispielsweise bei einem Wendemanöver der Arbeitsmaschine **2** im Bereich eines Vorgewendes oder bei einer Straßenfahrt der jeweiligen Arbeitsmaschine **2** vorteilhaft sein kann.

Ferner kann die zweite Kolben-Zylinder-Einheit **28** dazu genutzt werden, dem vorstehend erläuterten Aufstellen des Raupenlaufwerks **1** passiv oder aktiv entgegenzuwirken. Mittels des Gasspeichers **43** kann eine Bewegung des Kolbens innerhalb des Zylinders der zweiten Kolben-Zylinder-Einheit **28** gedämpft werden. Für eine aktive Beeinflussung kann alternativ oder zusätzlich der kolbenseitige Arbeitsraum **49** mittels der Druckquelle **50** mit hydraulischem Druck beaufschlagt werden. Mit anderen Worten hat die zweite Kolben-Zylinder-Einheit **28** unter anderem die Funktion, das Aufstellen des Raupenlaufwerks **1** infolge einer vertikalen Verlagerung der Schwenkachse **14** ausgehend von ihrer in **Figur 3** dargestellten Nulllage zu reduzieren und hierdurch zu kontrollieren. Besagtes Aufstellen ist dadurch bedingt, dass ein vertikal gemessener Abstand der Schwenkachse **14** von dem Obertrum **38** des Laufgurts **11** infolge einer Verlagerung der Schwenkachse **14** vertikal nach oben verringert wird, während ein gleichartig gemessener Abstand der Schwenkachse **14** von dem Untertrum **39** des Laufgurts **11** vergrößert wird. Hierdurch bedingt wird infolge einer Gurtspannung des Laufgurts **11** ein Drehmoment um die Schwenkachse **14** auf den vorderen Hauptrahmen **5** und den hinteren Hauptrahmen **6** bewirkt, das eine weitergehende Bewegung der Schwenkachse **14** nach oben begünstigt. Umso weiter die Schwenkachse **14** angehoben wird, desto größer wird das Drehmoment, das diesen Effekt unterstützt, sodass sich eine selbst verstärkende Auslenkung der Schwenkachse **14** nach oben ergibt.

Mittels der zweiten Kolben-Zylinder-Einheit **28** kann einer Vergrößerung des Abstands zwischen den beiden Enden **40, 41** der zweiten Kolben-Zylinder-Einheit **28,** die sich bei dem Aufstellen ergibt, entgegengewirkt werden. Dies erfolgt in dem gezeigten Beispiel derart, dass der Druck in dem kolbenseitigen Arbeitsraum **49** erhöht wird, wodurch der Kolben in dem Zylinder stabilisiert wird, das heißt an einem weiteren Ausfahren gehindert wird. Entsprechend wird in der zweiten Kolben-Zylinder-Einheit **28** ein Gleichgewicht mit der Kraft bewirkt, die sich infolge des wirkenden Drehmoments ergibt, das sich wiederum infolge der Anhebung der Schwenkachse **14** ergibt und das Aufstellen bewirkt. Entsprechend kann das Aufstellen verlangsamt oder gestoppt werden.

### Bezugszeichenliste

- 1: Raupenlaufwerk
- 2: Arbeitsmaschine
- 3: vorderes Hauptrad
- 4: hinteres Hauptrad
- 5: vorderer Hauptrahmen
- 6: hinterer Hauptrahmen
- 7: Drehachse
- 8: Drehachse
- 9: Stützrad
- 10: Stützrad
- 11: Laufgurt
- 12: Anlenkstelle
- 13: Maschinenachse
- 14: Schwenkachse
- 15: Stützrahmen
- 16: Längsachse
- 17: Stützradschwinge
- 18: erste Kolben-Zylinder-Einheit
- 19: Schwingenende
- 20: Rahmenende
- 21: Gliedachse
- 22: Vertikale
- 23: Abstand
- 24: Radabstand
- 25 26 27 28: zweite Kolben-Zylinder-Einheit
- 29: Mittelebene
- 30: Bandspannzylinder
- 31: Kolben-Zylinder-Einheit
- 32: Kolben-Zylinder-Einheit
- 33: Schwenkarm
- 34: Gelenk
- 35: Gelenk
- 36: Ende
- 37: Ende
- 38: Obertrum
- 39: Untertrum
- 40: Ende
- 41: Ende
- 42: Karosserie
- 43: Gasspeicher
- 44: Druckeinrichtung
- 45: Druckeinrichtung
- 46: Druckeinrichtung
- 47: Arbeitsraum
- 48: Arbeitsraum
- 49: Arbeitsraum
- 50: Druckquelle

## Patentansprüche

1. Raupenlaufwerk (1) für eine landwirtschaftliche Arbeitsmaschine (2), umfassend
- ein vorderes Hauptrad (3),
- ein in Längsrichtung des Raupenlaufwerks (1) betrachtet dem vorderen Hauptrad (3) gegenüberliegendes hinteres Hauptrad (4),
- einen dem vorderen Hauptrad (3) zugeordneten vorderen Hauptrahmen (5),
- einen dem hinteren Hauptrad (4) zugeordneten hinteren Hauptrahmen (6),
- mindestens zwei in einem Zwischenbereich zwischen den Haupträdern (3, 4) angeordnete Stützräder (9, 10),
- einen die Haupträder (3, 4) umspannenden Laufgurt (11),
- eine Anlenkstelle (12), mittels der das Raupenlaufwerk (1) unter Ausbildung einer Maschinenachse (13) schwenkbeweglich mit einer Karosserie (42) der Arbeitsmaschine (2) verbindbar ist,
wobei die beiden Hauptrahmen (5, 6) um eine gemeinsame Schwenkachse (14) schwenkbeweglich miteinander gekoppelt sind,
wobei die Stützräder (9, 10) an einem gemeinsamen Stützrahmen (15) bezogen auf eine Längsachse (16) des Raupenlaufwerks (1) hintereinander angeordnet sind,
wobei der Stützrahmen (15) mittels einer Stützradschwinge (17) schwenkbeweglich mit dem vorderen Hauptrahmen (5) verbunden ist,
**gekennzeichnet durch**
eine erste Kolben-Zylinder-Einheit (18), die an ihrem ersten Ende (19) mit der Stützradschwinge (17) und an ihrem zweiten Ende (20) mit dem hinteren Hauptrahmen (6) gekoppelt ist und hierdurch die Stützradschwinge (17) und den hinteren Hauptrahmen (6) miteinander koppelt, sowie
durch eine zweite Kolben-Zylinder-Einheit (28), die an ihrem ersten Ende (40) mit dem vorderen Hauptrahmen (5) und an ihrem zweiten Ende (41) mit dem hinteren Hauptrahmen (6) gekoppelt ist.

2. Raupenlaufwerk (1) nach einem der vorhergehenden Ansprüche, **dadurch gekennzeichnet, dass** das die erste Kolben-Zylinder-Einheit (18) dazu vorgesehen und eingerichtet ist, Bewegungen, die die Stützräder (9, 10) und der hintere Hauptrahmen (6) relativ zueinander ausführen, zu dämpfen.

3. Raupenlaufwerk (1) nach einem der vorhergehenden Ansprüche, **dadurch gekennzeichnet, dass** die zweite Kolben-Zylinder-Einheit (28) dazu vorgesehen und eingerichtet ist, die Hauptrahmen (5, 6) aktiv mit einem gegenseitigen Drehmoment um die gemeinsame Schwenkachse (14) zu beaufschlagen.

4. Raupenlaufwerk (1) nach einem der vorhergehenden Ansprüche, **dadurch gekennzeichnet, dass** mindestens einer der Kolben-Zylinder-Einheiten (18, 28), vorzugsweise beiden Kolben-Zylinder-Einheiten (18, 28), jeweils mindestens eine Druckeinrichtung (44, 45, 46) zugeordnet ist.

5. Raupenlaufwerk (1) nach einem der vorhergehenden Ansprüche, **dadurch gekennzeichnet, dass** die erste Kolben-Zylinder-Einheit (18) doppelwirkend ausgebildet ist, wobei ein kolbenseitiger Arbeitsraum (47) mit einer Druckeinrichtung (45) zusammenwirkt, mittels der der kolbenseitige Arbeitsraum (47) mit Druck beaufschlagbar ist, wodurch ein Druck in einem zylinderseitigen Arbeitsraum (48) derart einstellbar ist, dass er sich innerhalb eines voreingestellten Bereichs befindet.

6. Raupenlaufwerk (1) nach Anspruch 5, **dadurch gekennzeichnet, dass** die erste Kolben-Zylinder-Einheit (18) mit zwei Druckeinrichtungen (45, 46) zusammenwirkt, wobei die erste Druckeinrichtung (45) mit dem kolbenseitigen Arbeitsraum (47) und die zweite Druckeinrichtung (46) mit dem zylinderseitigen Arbeitsraum (48) wirkverbunden ist.

7. Raupenlaufwerk (1) nach Anspruch 6, **dadurch gekennzeichnet, dass** eine der Druckeinrichtungen (45) von einem Gasspeicher gebildet ist.

8. Raupenlaufwerk (1) nach einem der vorhergehenden Ansprüche, **dadurch gekennzeichnet, dass** die zweite Kolben-Zylinder-Einheit (28) einfachwirkend ausgebildet ist.

9. Raupenlaufwerk (1) nach einem der vorhergehenden Ansprüche, **dadurch gekennzeichnet, dass** der zweiten Kolben-Zylinder-Einheit (28) eine Druckeinrichtung (44) zugeordnet ist, wobei vorzugsweise die Druckeinrichtung (44) mit einem kolbenseitigen Arbeitsraum (49) der zweiten Kolben-Zylinder-Einheit (28) wirkverbunden ist.

10. Raupenlaufwerk (1) nach einem der Ansprüche 4 bis 9, **dadurch gekennzeichnet, dass** mindestens eine Druckeinrichtung (44, 45, 46), vorzugsweise sämtliche Druckeinrichtungen (44, 45, 46), einen Gasspeicher umfasst oder von einem Gasspeicher gebildet ist.

11. Raupenlaufwerk (1) nach einem der Ansprüche 4 bis 10, **dadurch gekennzeichnet, dass** mindestens eine Druckeinrichtung (44, 45, 46) eine hydraulischen Druckquelle (50) umfasst oder an eine hydraulische Druckquelle (50) angeschlossen ist, mittels der aktiv ein veränderlicher hydraulischer Druck auf einen Arbeitsraum (47, 48, 49) mindestens einer der Kolben-Zylinder-Einheiten (18, 28) aufbringbar ist.

12. Raupenlaufwerk (1) nach einem der vorhergehenden Ansprüche, **dadurch gekennzeichnet, dass** die zweite Kolben-Zylinder-Einheit (28) derart eingerichtet ist, dass ein Druck in der zweiten Kolben-Zylinder-Einheit (28) unabhängig von einer auf das Raupenlaufwerk (1) einwirkenden Nutzlast sich innerhalb eines voreingestellten Bereichs befindet.

13. Raupenlaufwerk (1) nach einem der vorhergehenden Ansprüche, **dadurch gekennzeichnet, dass** die Schwenkachse (14) der beiden Hauptrahmen (3, 4) mit der Maschinenachse (13) zusammenfällt.

14. Raupenlaufwerk (1) nach einem der vorhergehenden Ansprüche, **dadurch gekennzeichnet, dass** die Drehachsen (7, 8) der beiden Haupträder (3, 4) und die Schwenkachse (14) bei Vorliegen des Raupenlaufwerks (1) in einer Mittellage, in der das Raupenlaufwerk (1) auf einem ebenen Untergrund steht, zumindest im Wesentlichen auf einem gemeinsamen Höhenniveau liegen.

15. Landwirtschaftliche Arbeitsmaschine (2), umfassend
- eine Karosserie (42),
- ein linkes Raupenlaufwerk (1),
- ein rechtes Raupenlaufwerk (1),
wobei die Raupenlaufwerke (1) jeweils über eine Anlenkstelle (12) mit der Karosserie (42) verbunden sind,
**dadurch gekennzeichnet, dass**
mindestens eines der Raupenlaufwerke (1) gemäß einem der vorhergehenden Ansprüche ausgebildet ist.
